(19) **Europäisches Patentamt European Patent Office Office européen des brevets**

(11) **EP 4 008 041 B1**

(12) **FASCICULE DE BREVET EUROPEEN**

(45) Date de publication et mention de la délivrance du brevet:
**09.07.2025 Bulletin 2025/28**

(21) Numéro de dépôt: **20751509.9**

(22) Date de dépôt: **31.07.2020**

(51) Classification Internationale des Brevets (IPC):
**H01P 3/127** (2006.01) **G02B 6/02** (2006.01)
**G02B 6/024** (2006.01)

(52) Classification Coopérative des Brevets (CPC):
**G02B 6/02366; G02B 6/02361; H01P 3/127;**
G02B 6/02328; G02B 6/024

(86) Numéro de dépôt international:
**PCT/EP2020/071732**

(87) Numéro de publication internationale:
**WO 2021/023674 (11.02.2021 Gazette 2021/06)**

(54) **GUIDE D'ONDES ELECTROMAGNETIQUES**

ELEKTROMAGNETISCHER WELLENLEITER

ELECTROMAGNETIC WAVEGUIDE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.08.2019 FR 1908906**

(43) Date de publication de la demande:
**08.06.2022 Bulletin 2022/23**

(73) Titulaires:
• **Université de Limoges**
  **87000 Limoges (FR)**
• **Centre national de la recherche scientifique**
  **75016 Paris (FR)**

(72) Inventeurs:
• **BENABID, Fetah**
  **87410 Le Palais-sur-Vienne (FR)**
• **VINCETTI, Luca**
  **4123 Parma (IT)**
• **GIOVANARDI, Fabio**
  **41123 Modena (IT)**

(74) Mandataire: **IPAZ**
**Bâtiment Platon**
**Parc Les Algorithmes**
**91190 Saint-Aubin (FR)**

(56) Documents cités:
**WO-A1-2019/071921    US-A1- 2018 267 235**

• **JOHN M. FINI ET AL: "Polarization maintaining single-mode low-loss hollow-core fibres", NATURE COMMUNICATIONS, vol. 5, no. 1, 28 October 2014 (2014-10-28), XP055686497, DOI: 10.1038/ncomms6085**
• **MATTIA MICHIELETTO ET AL: "Hollow-core fibers for high power pulse delivery", OPTICS EXPRESS, vol. 24, no. 7, 24 March 2016 (2016-03-24), US, pages 7103, XP055595933, ISSN: 2161-2072, DOI: 10.1364/OE.24.007103**

## Description

### Domaine technique

La présente invention concerne le domaine du guidage des ondes électromagnétiques notamment par le mécanisme du Couplage Inhibé, et notamment des ondes dans les domaines de l'optique, des Tera Hertz et des Micro-Ondes.

L'invention propose un guide d'ondes permettant un guidage monomode et dans certains cas, une conservation de la polarisation de l'onde électromagnétique dans le guide d'ondes.

### État de la technique

Plusieurs types de fibres optiques creuses sont actuellement utilisées ou à l'étude.

Parmi ces types de fibres optiques, se trouvent des fibres creuses à cristaux photoniques ou fibres creuses micro-structurées, par guidance dite à Bande Interdite Photonique, aussi appelées BIP. De telles fibres trouvent leur intérêt dans les domaines de l'optique non linéaire, la conversion de fréquences optiques, la spectroscopie. Ce type de fibres montre cependant des limites notamment en termes :

> a. de pertes linéiques : elles s'élèvent à environ 1dB/km pour une longueur d'onde de l'ordre de 1,5 μm, cette valeur augmente rapidement pour des longueurs d'ondes plus courtes telles celles du domaine du visible pour lesquelles il est possible d'atteindre des pertes linéiques de l'ordre de 1000dBlkm ;
>
> b. de déport pour des lasers de puissance : à cause d'un fort recouvrement du mode guidé dans le cœur de la fibre avec son contour en silice, le seuil de dommages réalisés est à peine plus élevé que pour des fibres à cœur solide de même diamètre ;
>
> c. de bande passante : les fibres creuses BIP ont une bande de transmission étroite, de l'ordre de 70THz. Ces bandes de transmission sont trop étroites pour des applications telles que l'optique non linéaire, la conversion de fréquence, les impulsions laser très brèves ;
>
> d. de dispersion : malgré un guidage dans l'air, la dispersion dans les fibres creuses BIP est trop élevée et structurée, ce qui pose problème pour des applications telles que la spectroscopie de haute résolution ou pour des impulsions laser brèves, mais aussi, limite le guidage monomode dans ce type de fibres.

Les fibres optiques creuses actuelles guidant par un mécanisme de couplage inhibé permettent de guider la lumière sur de larges bandes de transmission avec une dispersion relativement faible mais avec des pertes relativement élevées. Les pertes pour ce type de fibres sont atténuées en utilisant un cœur à contour hypocycloïdal.

Les recherches actuelles visent à encore réduire les pertes pour ce type de fibre optique.

De plus, les fibres optiques actuelles étant intrinsèquement multimodes ceci limite leur application dans certains domaines tels que le domaine des télécommunications par exemple.

Le document de brevet WO2019/071921A1 divulgue une fibre optique anti-résonnante à noyau creux ayant plusieurs couches anti-résonnantes.

### Résumé de l'invention

La présente invention a pour objet un guide d'ondes électromagnétiques, à base du mécanisme de couplage inhibé, comprenant une partie centrale creuse dont le contour est au moins en partie défini par un premier ensemble d'au moins sept tubes creux primaires, répartis de manière annulaire autour de la partie creuse centrale, lesdits tubes creux primaires étant sensiblement de même taille, distants les uns des autres. Selon l'invention, ledit guide d'ondes comprend en outre un deuxième ensemble de tubes comprenant au moins un tube secondaire creux, lorsqu'il y en a plusieurs ces tubes secondaires sont positionnés de manière annulaire autour des tubes primaires, l'aire de l'au moins un tube secondaire creux étant comprise entre 0,35 et 0,50 fois l'aire de la partie creuse centrale.

Les tubes primaires peuvent être fixés aux tubes secondaires ou à une paroi d'une gaine portant les tubes secondaires.

On entend par aire de la partie creuse centrale l'aire du cercle inscrit, interne à l'agencement annulaire du premier ensemble de tubes creux.

Avantageusement, le rapport, ou loi d'échelle, entre l'aire de la partie creuse centrale et l'aire de l'au moins un tube secondaire creux permet de limiter les pertes du guide d'ondes selon l'invention.

Avantageusement, le guide d'ondes selon l'invention réalise notamment un guidage monomodal des ondes, par exemple par filtrage des quatre premiers modes d'ordre supérieur du cœur afin de conserver uniquement le mode fondamental du cœur.

Dans un mode de réalisation particulièrement avantageux, l'au moins un tube secondaire creux est positionné en vis-à-vis d'un premier tube creux.

Dans un autre mode de réalisation particulièrement avantageux, l'au moins un tube secondaire creux est positionné en vis-à-vis d'un intervalle entre deux tubes creux primaires.

Avantageusement, les tubes primaires peuvent avoir une section de l'une des formes suivantes :

> a. un cercle ;
> b. une ellipse ;
> c. une ellipse barrée ;
> d. au moins deux cercles, dont un premier cercle et au moins un deuxième cercle inscrit dans le premier cercle.

Avantageusement, les tubes creux primaires peuvent avoir une section composée d'un premier cercle comprenant au moins un cercle inscrit, en cas de plusieurs cercles inscrits, ces cercles inscrits sont répartis sur la circonférence interne du premier cercle, lesdits cercles inscrits étant distants les uns des autres.

Avantageusement si les tubes primaires ont une section en forme d'ellipse, le grand axe de ladite ellipse est positionné de façon radiale par rapport au centre de la partie centrale creuse, appelée aussi cœur creux.

Avantageusement si les tubes primaires ont une section en forme d'ellipse barrée, ladite ellipse est partagée en deux par un segment.

Si les tubes primaires ont une section en forme d'ellipse barrée, le segment partageant en deux la section d'ellipse est situé sur le petit axe de ladite ellipse.

Avantageusement l'au moins un tube secondaire peut avoir une section d'une des formes suivantes :

    a. un cercle ;
    b. un hexagone ;
    c. un carré ;
    d. un triangle ;
    e. une forme dont le contour est composé d'un arc de cercle et de trois côtés d'un polygone, aussi appelée forme en pétale.

Les tubes secondaires tubes secondaires peuvent être distants les uns des autres.

Alternativement, les tubes secondaires peuvent se toucher

Les sections des tubes secondaires peuvent former une grille comprenant au moins un élément unitaire.

La grille peut comprendre plusieurs éléments unitaires de différentes formes.

Un élément unitaire peut être de forme polyédrique.

Les sections des tubes secondaires peuvent par exemple former une grille d'éléments unitaires hexagonaux.

Les sections des tubes secondaires peuvent par exemple former une grille d'éléments unitaires triangulaires.

Alternativement, les sections des tubes secondaires peuvent par exemple former une grille d'éléments unitaires sensiblement carrés.

Alternativement, les sections des tubes secondaires peuvent par exemple former une grille d'éléments unitaires rectangulaires.

Les tubes secondaires peuvent former une grille ayant plus d'un type d'élément unitaires et agencés pour former un maillage, triangulaire, hexagonal, carré ou une combinaison de ces agencements.

Les tubes secondaires dont le contour est composé d'un arc de cercle et de trois côtés d'un polygone peuvent être répartis de façon à former au moins une corolle entourant les tubes primaires. Chacune des formes composant la corolle peut être contiguë avec sa voisine.

Dans un mode particulier de réalisation de l'invention, le guide d'ondes peut être une fibre optique.

La fibre optique peut être une fibre optique micro-structurée.

Les tubes primaires et les tubes secondaires peuvent être en matériau diélectrique.

Les premiers et tubes secondaires peuvent avoir des parois de la même épaisseur, et par exemple d'une épaisseur comprise entre 100nm et 2000nm.

La partie centrale creuse, les premiers et tubes secondaires peuvent être remplis par un gaz comme par exemple de l'air.

Le guide d'ondes selon l'invention guide notamment les ondes par couplage inhibé.

Le guide d'ondes peut guider des ondes parmi :

    a. des ondes de l'extrême ultraviolet à l'infrarouge ;
    b. des ondes Téra-hertz ;
    c. des micro-ondes.

Le matériau des tubes secondaires peut être un matériau à faible coefficient d'absorption tel que le téflon, ayant un indice de réfraction supérieur à 1,2 fois celui de l'air.

Alternativement, le matériau des tubes secondaires peut être un matériau hautement réflectif tel un métal comme le cuivre.

Alternativement, le matériau des tubes secondaires peut être un matériau à faible coefficient d'absorption tel que la silice.

Le matériau des tubes secondaires peut être un matériau transparent de type silice ayant un saut d'indice de réfraction supérieur à 1,2 fois l'indice de réfraction du vide.

Le guide d'ondes selon l'invention peut, dans un mode de réalisation particulièrement avantageux, comprendre en outre un ensemble de tiges, au moins une tige étant positionnée entre deux tubes primaires, à distance de tubes secondaires.

Dans un tel mode de réalisation, le guide d'ondes maintient la polarisation des ondes guidées.

L'au moins un troisième tube peut être d'une des formes suivantes :

    a. un tube plein cylindrique ;
    b. un tube plein elliptique ;
    c. un tube creux cylindrique ;
    d. un tube creux cylindrique barré dont les moitiés sont séparées sur toute la longueur du tube ;
    e. un tube creux elliptique barré dont les moitiés sont séparées sur toute la longueur du tube.

Selon l'invention, les tubes secondaires peuvent être réalisés dans une gaine du guide d'ondes et les tubes primaires peuvent être fixés à la paroi interne de ladite gaine.

Dans un tel cas par exemple, la distance $\delta_{rr}$ entre l'au moins un tube secondaire et la paroi interne de la gaine est de préférence inférieure à $0.2*r_{tin}$ pour le cas d'un tube primaire circulaire ou inférieure à $0.2*\sqrt{(Aire_{in}/\pi)}$ pour un tube primaire ayant une aire égale à $Aire_{in}$.

Selon l'invention, chaque tube primaire peut être fixé à la paroi d'un tube secondaire.

L'invention prévoit ainsi le cas où les tubes primaires sont réalisés dans le vide mais fixés à des tubes secondaires qui peuvent être réalisés partiellement ou totalement dans la gaine ou réalisés dans le vide mais fixés à une paroi d'une jaquette par exemple.

**Description des figures**

D'autres avantages et particularités de l'invention apparaîtront à la lecture de la description détaillée de mises en œuvre et de modes de réalisation nullement limitatifs, et des dessins annexés suivants :

[fig.1a] La figure 1a représente un premier exemple d'un guide d'ondes selon l'invention comprenant un cœur creux et deux structures annulaires concentriques, dont la première structure annulaire comprend sept tubes et la deuxième structure annulaire comprend un tube ;

[fig.1b] La figure 1b représente différentes formes possibles pour des tubes composant une première structure annulaire du guide d'ondes selon l'invention ;

[fig.1c] La figure 1c représente différentes formes possibles pour des tubes composant une deuxième structure annulaire du guide d'ondes selon l'invention ;

[fig.2] La figure 2 représente un deuxième exemple d'un guide d'ondes selon l'invention comprenant deux tubes dans la deuxième structure annulaire, positionnés face à un interstice entre deux tubes de la première structure annulaire comprenant huit tubes ;

[fig.3] La figure 3 représente un troisième exemple d'un guide d'ondes selon l'invention comprenant quatre tubes dans la deuxième structure annulaire positionnés face à un interstice entre deux tubes de la première structure annulaire comprenant huit tubes ;

[fig.4] La figure 4 représente un quatrième exemple d'un guide d'ondes selon l'invention comprenant deux tubes dans la deuxième structure annulaire positionnés face à un tube de la première structure annulaire comprenant huit tubes ;

[fig.5] La figure 5 représente un cinquième exemple d'un guide d'ondes selon l'invention comprenant quatre tubes dans la deuxième structure annulaire

positionnés face à un tube de la première structure annulaire comprenant huit tubes ;

[fig.6] La figure 6 représente un sixième exemple d'un guide d'ondes selon l'invention comprenant huit tubes dans la première structure annulaire et comprenant huit tubes dans la deuxième structure annulaire, selon l'invention ;

[fig.7] La figure 7 représente un septième exemple d'un guide d'ondes à maintien de polarisation selon l'invention ;

[fig.8] La figure 8 représente un huitième exemple d'un guide d'ondes à guidage monomodal et à maintien de polarisation selon l'invention ;

[fig.9] La figure 9 représente plusieurs formes possibles pour des tiges présentent dans la première structure annulaire ;

[fig.10] La figure 10 représente un neuvième exemple d'un guide d'ondes selon l'invention comprenant neuf tubes dans la première structure annulaire et une deuxième structure annulaire comprenant des tubes en forme de pétales ;

[fig.11] La figure 11 représente un dixième exemple d'un guide d'ondes selon l'invention comprenant neuf tubes dans la première structure annulaire et comprenant une deuxième structure annulaire notamment composée d'une grille de motif unitaire carré ;

[fig.12] La figure 12 représente un onzième exemple d'un guide d'ondes selon l'invention comprenant sept tubes dans la première structure annulaire et comprenant une deuxième structure annulaire notamment composée d'une grille de motif unitaire hexagonal ;

[fig.13a] La figure 13a représente une première alternative au premier anneau d'un guide d'ondes selon l'invention comprenant neuf tubes à section circulaire comprenant chacun un autre tube à section circulaire ;

[fig.13b] La figure 13b représente une deuxième alternative au premier anneau d'un guide d'ondes selon l'invention comprenant neuf tubes à section circulaire comprenant chacun trois autres tubes à section circulaire ;

[fig.13c] La figure 13c représente une troisième alternative au premier anneau d'un guide d'ondes selon l'invention comprenant dix tubes de section elliptique ;

[fig.13d] La figure 13d représente une quatrième alternative d'une structure du premier anneau d'un guide d'ondes selon l'invention comprenant dix tubes de section elliptique barrée.

Un objectif de la présente invention est notamment de réduire les pertes pour un mode de propagation d'ordre donné et d'augmenter les pertes pour les modes de propagation d'ordres supérieurs.

## Description détaillée de l'invention

L'objet de la présente invention est notamment de proposer un guide d'ondes électromagnétiques ayant une partie centrale creuse délimitée par un premier ensemble de tubes isolés les uns des autres, portés par une première structure tubulaire, et ordonnés de sorte à former un anneau, appelé par exemple anneau interne ou premier anneau, et d'une deuxième structure annulaire ou anneau externe. La deuxième structure annulaire peut avantageusement comprendre un deuxième ensemble de tubes positionnés autour de l'anneau formé par les tubes de l'anneau interne.

La présente invention peut s'appliquer dans différents domaines et notamment pour guider des ondes dans le domaine de l'optique, des Téra Hertz, des micro-ondes.

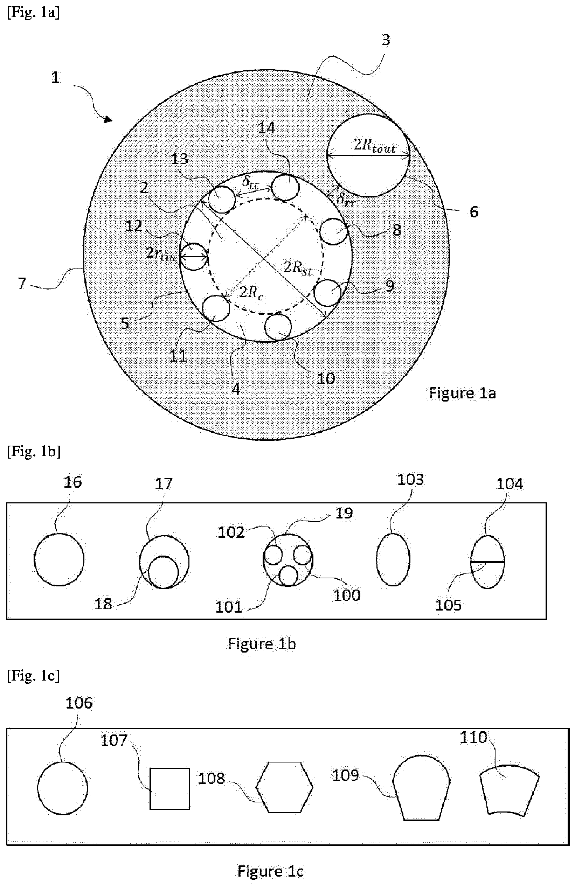

La figure 1a représente un premier exemple d'un guide d'ondes électromagnétiques 1 selon l'invention. Le premier guide d'ondes électromagnétiques 1 peut être une fibre optique creuse à guidage par couplage inhibé.

Le guide d'ondes 1 comprend une partie centrale creuse ou cœur creux 2 qui peut être rempli soit d'air, soit d'un gaz neutre ou encore de vide. Le cœur creux 2 peut avoir un diamètre minimum $2R_c$, $R_c$ correspondant à un rayon du cœur creux 2. Autour du cœur creux 2 se trouve un premier anneau 4 ou anneau interne 4 cylindrique ou encore première structure annulaire 4, contenu dans le vide comme le cœur creux 2, s'étendant sur toute la longueur du guide d'ondes. L'anneau interne 4 a pour rayon interne $R_c$ et pour rayon externe $R_{st}$.

L'anneau interne 4 comprend plusieurs tubes creux primaires 8, 9, 10, 11, 12, 13, 14 distants les uns des autres. Par exemple, tel que représenté sur la figure 1a, le premier guide d'ondes 1 peut comprendre sept tubes primaires de section circulaire. Une distance entre deux tubes primaires peut être $\delta_{tt}$. La distance $\delta_{tt}$ est de préférence supérieure à zéro. La distance $\delta_{tt}$ est de préférence, mais pas limité à, égale ou inférieure à 0.1 $r_{tin}$ pour des tubes du premier anneau de forme circulaire de rayon $r_{tin}$, ou $0.1\sqrt{Aire_{in}/\pi}$ pour un tube non-circulaire ayant une aire de $Aire_{in}$. La distance $\delta_{tt}$ peut être comprise entre 800nm et 2μm.

$R_c, r_{tin}$ et $\delta_{tt}$ peuvent être liés par la relation suivante :

$$r_{tin} = \frac{R_c \sin\left(\frac{\pi}{N}\right) - \frac{\delta_{tt}}{2}}{1 - \sin\left(\frac{\pi}{N}\right)}$$

avec N, le nombre de tubes primaires de l'anneau interne 4.

Pour des tubes non-circulaire, la relation reste valable en remplaçant Rc, $r_{tin}$ par

$$0.1\sqrt{Aire_C/\pi} \quad \text{et} \quad 0.1\sqrt{Aire_{in}/\pi}$$

respectivement

Un guide d'ondes selon l'invention comprend avantageusement au moins sept tubes primaires. Le guide d'ondes peut toutefois comprendre plus de sept tubes primaires.

Par exemple un guide d'onde comprenant six tubes primaires à une taille du cœur inférieur à un guide d'ondes comprenant sept tubes primaires. L'utilisation d'au moins sept tubes primaires permet de minimiser les pertes, notamment du fait que le cœur à une taille plus importante qu'avec sept tubes primaires.

Les tubes primaires peuvent être portés par une paroi interne 5 d'une gaine 3.

Sur la figure 1a, les tubes primaires 8, 9, 10, 11, 12, 13, 14 sont représentés selon une première forme de section circulaire 16 telle que représentée sur la figure 1b.

Sur la figure 1b se retrouvent d'autres formes possibles pour les tubes primaires 16, 17, 19, 103, 104. Une deuxième forme peut être de section circulaire 17 et comprendre au moins un autre tube de section circulaire 18, 100, 101, 102. Par exemple et tel que représenté sur la figure 1b, la deuxième forme peut comprendre un tube de section circulaire 18. Une troisième forme peut alternativement comprendre deux ou trois tubes 100, 101, 102 contenus dans un premier tube 19, de forme circulaire.

Par exemple les tubes 100, 101, 102 compris dans les tubes primaires 19 peuvent être distants les uns des autres, et en contact avec la surface interne des tubes primaires 19.

Une quatrième forme de section pour les tubes primaires peut être une forme ellipsoïdale 103, 104 telle que représentée sur la figure 1b. Le grand axe de l'ellipse peut être orienté de façon radiale, c'est-à-dire en direction du centre du premier guide d'ondes 1. Dans un mode de réalisation particulier, l'ellipse 104 peut être une ellipse barrée par exemple selon son petit diamètre. La barre 105 peut s'étendre sur toute la longueur du premier tube de section elliptique 104.

Il est également possible que les tubes primaires aient une forme de section différente les uns par rapport aux autres.

Tel que représenté sur la figure 1a, le premier guide d'ondes 1 selon l'invention comprend en outre la gaine 3 qui constitue un deuxième anneau aussi appelé anneau externe 3 comprenant au moins un tube secondaire creux cylindrique 6 de diamètre $2R_{tout}$. Le rayon $R_{tout}$ peut être compris dans l'intervalle $[0,6×R_c ; 0,7×R_c]$. Préférentiellement $R_{tout} = 0,66×R_c$.

L'intérieur de l'anneau externe 3 est formé dans un matériau solide dans lequel est inséré l'au moins un tube secondaire creux 6.

La distance entre l'au moins un tube secondaire 6 et la surface externe de l'anneau interne 4 est $\delta_{rr}$. $\delta_{rr}$ peut être négatif. Préférentiellement $\delta_{rr} < 0.2 r_{tin}$ pour le

cas d'un tube circulaire ou

$$\delta_{rr} < 0.2\sqrt{Aire_{in}/\pi}$$ pour un tube ayant une aire égale à A*ire*$_{in}$.

Sur la figure 1a, le tube secondaire 6 est positionné en vis-à-vis d'un intervalle entre deux tubes primaires consécutifs 8 et 14, à titre d'exemple. Le tube secondaire 6 peut alternativement être positionné en vis-à-vis d'un premier tube 8, 9, 10, 11, 12, 13, 14.

La figure 1c représente plusieurs exemples de formes possibles pour la section de l'au moins un tube secondaire. Une première forme peut être une section circulaire 106, une deuxième forme peut être une forme de section polygonale et par exemple carrée 107, ou triangulaire, une troisième forme peut être une section hexagonale 108. Une quatrième forme 109 peut être une section composée d'une portion de cercle fermée par une portion d'hexagone ou de polygone, par exemple à trois branches. La quatrième forme 109 peut être nommée forme en pétale.

Avantageusement, il est possible d'avoir au moins un tube secondaire d'une forme telle que représentée sur la figure 1c et d'autres tubes secondaires de formes différentes, par exemple les autres formes représentées sur la figure 1c, les formes représentées sur les figure 1b.

Les tubes secondaires de section circulaire peuvent être distants les uns des autres.

Les sections des tubes secondaires peuvent former une grille comprenant au moins un élément unitaire d'une des formes de section représentées sur la figure 1c. Par exemple, les sections des tubes secondaires peuvent former une grille d'éléments unitaires hexagonaux. Alternativement, les sections des tubes secondaires peuvent former une grille d'éléments unitaires triangulaires. Dans un autre mode de réalisation possible les sections des tubes secondaires peuvent former une grille d'éléments unitaires sensiblement carrés.

De manière générale, les sections des tubes secondaires peuvent former une grille comprenant plus d'un élément unitaire, lesdits éléments unitaires étant agencés pour former un maillage triangulaire, hexagonal, carré ou une combinaison de ces agencements.

Sur la figure 1a, une deuxième structure tubulaire 7 peut former une jaquette du guide d'ondes selon l'invention. Le tube secondaire 6 peut être porté par la deuxième structure tubulaire 7.

Avantageusement, un tel guide d'ondes permet de conserver des pertes d'énergie assez faibles pour le mode à propager et d'augmenter les pertes pour les modes d'ordres supérieurs. En effet, les modes d'ordres supérieurs peuvent fuiter par les intervalles entre deux tubes primaires consécutifs lorsqu'ils ne sont pas placés en vis-à-vis avec les tubes secondaires. Alternativement, les modes d'ordres supérieurs peuvent fuiter par les tubes secondaires lorsque ceux-ci sont en contacts avec les tubes primaires.

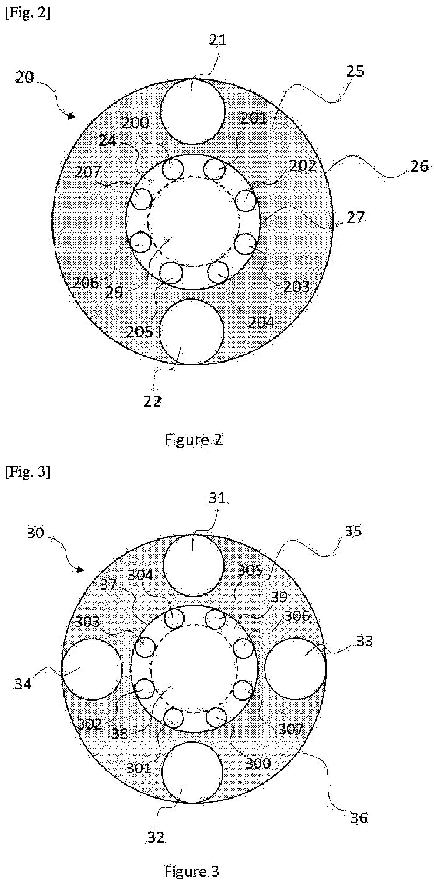

La figure 2 représente un deuxième exemple d'un guide d'ondes 20 selon l'invention.

Le deuxième guide d'ondes 20, comme le premier guide d'ondes 1 comprend un cœur 29 entouré d'un premier anneau 24 constitué de huit tubes primaires 200, 201, 202, 203, 204, 205, 206, 207. Les huit tubes primaires 200, 201, 202, 203, 204, 205, 206, 207 sont supportés par la paroi interne 27 d'une gaine 25 formant un anneau externe.

Le deuxième guide d'ondes 20 comprend également deux tubes secondaires 21, 22 faisant partie d'un anneau externe 25. Les deux tubes secondaires 21, 22 sont positionnés en vis-à-vis du cœur 2 et de deux intervalles entre deux tubes primaires consécutifs 200, 201 et 204, 205.

La configuration des tubes secondaires en vis-à-vis d'un interstice entre deux tubes primaires est particulièrement pertinente lorsque la distance entre deux tubes primaires consécutifs est relativement grande.

Une deuxième structure tubulaire 26 peut former une jaquette du guide d'ondes selon l'invention. Les tubes secondaires 21, 22 peuvent être portés par la deuxième structure tubulaire 26.

La figure 3 représente un troisième exemple d'un guide d'ondes 30 à propagation d'onde monomodale selon l'invention.

Le deuxième guide d'ondes 30, comme le premier guide d'ondes 1 comprend un cœur 38 entouré d'un premier anneau 39 constitué de huit tubes primaires 300, 301, 302, 303, 304, 305, 306, 307. Les huit tubes primaires 300, 301, 302, 303, 304, 305, 306, 307 sont supportés par la paroi interne 37 d'une gaine 35 formant un anneau externe.

Le deuxième guide d'ondes 30 comprend également quatre tubes secondaires 31, 32, 33, 34 faisant partie d'un deuxième anneau 35. Les quatre tubes secondaires 31, 32, 33, 34 sont positionnés en vis-à-vis d'un interstice entre deux des tubes primaires du premier anneau 39. Respectivement sur la figure 3, les quatre tubes secondaires 31, 32, 33, 34 sont positionné en vis-à-vis des interstices entre les tubes primaires 304 et 305, 306 et 307, 300 et 301, 302 et 303.

Une deuxième structure tubulaire 36 peut former une jaquette du guide d'ondes selon l'invention. Les tubes secondaires 31, 32, 33, 34 peuvent être portés par la deuxième structure tubulaire 36.

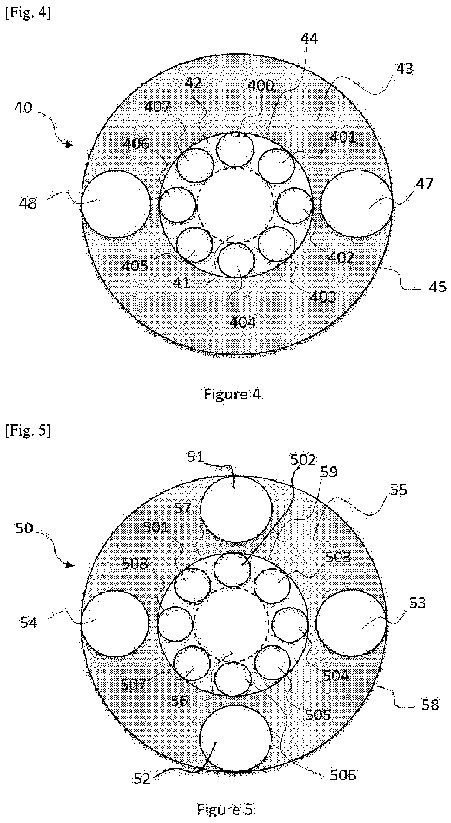

La figure 4 représente un quatrième exemple d'un guide d'ondes 40 à propagation d'onde monomodale selon l'invention.

Le quatrième guide d'ondes 40, comme le troisième guide d'ondes 30 comprend un cœur 41 entouré d'un premier anneau 42 constitué de huit tubes primaires 400, 401, 402, 403, 404, 405, 406, 407. Les huit tubes primaires 400, 401, 402, 403, 404, 405, 406, 407 sont supportés par la paroi interne 44 d'une gaine 43 formant un anneau externe. Les huit tubes primaires 400, 401, 402, 403, 404, 405, 406, 407 sont par exemple mais non nécessairement régulièrement répartis dans le premier anneau 42. Le quatrième guide d'ondes 40 comprend également deux tubes secondaires 47, 48 faisant partie d'un deuxième anneau 43. Les deux tubes secondaires 47, 48 sont positionnés en vis-à-vis d'un des tubes primaires du premier anneau 42.

Une deuxième structure tubulaire 45 peut former une jaquette du guide d'ondes selon l'invention. Les tubes secondaires 47, 48 peuvent être portés par la deuxième structure tubulaire 45.

Avantageusement, l'alignement de tubes primaires 47, 48 avec des tubes secondaires 402, 406 permet de faire fuiter des modes de propagation non désirés. Ce type d'architecture de guide d'ondes est particulièrement pertinent lorsque les espaces entre les tubes primaires sont relativement petits.

La figure 5 représente un cinquième exemple d'un guide d'ondes 50 à propagation d'onde monomodale selon l'invention.

Le cinquième guide d'ondes 50, comprend huit tubes primaires 501, 502, 503, 504, 505, 506, 507, 508 répartis sur un premier anneau 57 autour du cœur 56. Les tubes primaires 501, 502, 503, 504, 505, 506, 507, 508 peuvent être portés par la paroi interne 59 d'une gaine 55 formant un anneau externe.

Le cinquième guide d'ondes 50 comprend en outre un deuxième anneau 55 comprenant des tubes secondaires 51, 53, 52, 54. Les tubes secondaires sont respectivement situés en vis-à-vis des tubes primaires 502, 504, 506, 508. Les tubes secondaires 502, 504, 506, 508 peuvent être distants les uns des autres.

Une deuxième structure tubulaire 58 peut former une jaquette du guide d'ondes selon l'invention. Les tubes secondaires 51, 53, 52, 54 peuvent être portés par la deuxième structure tubulaire 58.

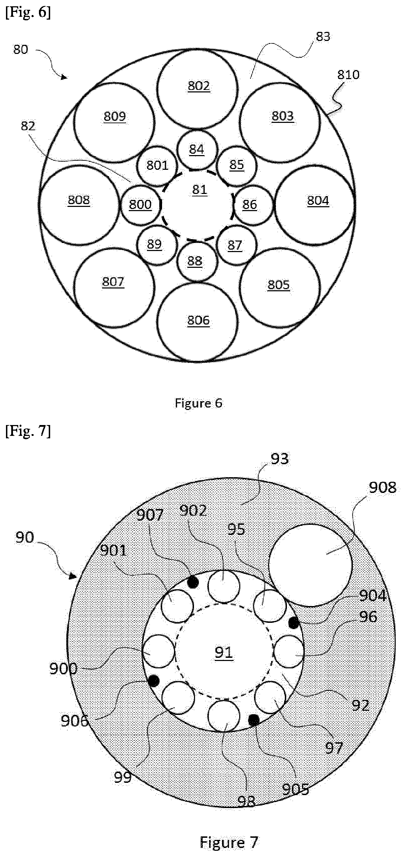

La figure 6 représente un sixième exemple d'un guide d'ondes 80 à propagation monomodale selon l'invention.

Le sixième guide d'ondes 80, comprend huit tubes primaires 84, 85, 86, 87, 88, 89, 800, 801 répartis sur un premier anneau 82 autour du cœur 81. Le sixième guide d'ondes 80 comprend en outre un deuxième anneau 83 comprenant huit tubes secondaires 802, 803, 804, 805, 806, 807, 808, 809. Les tubes secondaires 802, 803, 804, 805, 806, 807, 808, 809 sont respectivement situés en vis-à-vis des tubes primaires 84, 85, 86, 87, 88, 89, 800, 801. Sur la figure 6 et par exemple, chaque tube primaire 84, 85, 86, 87, 88, 89, 800, 801 est en contact direct avec le tube secondaire 802, 803, 804, 805, 806, 807, 808, 809 respectivement en vis-à-vis. Les tubes primaires et secondaires sont ainsi fixés deux par deux et suspendus dans le vide. Chaque tube secondaire est fixé à une paroi 810, qui peut être la paroi interne d'une gaine ou autre jaquette par exemple.

La figure 7 représente un septième exemple de guide d'ondes 90. Le septième guide d'ondes 90 est un guide d'ondes à maintien de polarisation. Le maintien de polarisation est assuré par la présence de tiges, par exemple quatre tiges, réparties dans un interstice sur deux entre des tubes primaires faisant partie d'un premier anneau entourant un cœur creux 91. Les tiges peuvent avoir une section dont l'aire est <0.2xAire$_{in}$ (l'aire d'un tube du premier ensemble).

Le septième guide d'ondes 90 peut comprendre un premier anneau 92 comprenant par exemple huit tubes primaires 95, 96, 97, 98, 99, 900, 901, 902 entourant le cœur creux 91. En outre, le septième guide d'ondes 90 peut comprendre quatre tiges 904, 905, 906, 907 positionnées dans le premier anneau 92. Par exemple, une première tige 904 peut être insérée entre un tube primaire 95 et un tube primaire 96 suivant sur le premier anneau 92 en tournant dans le sens des aiguilles d'une montre. Une deuxième tige 905 peut être insérée entre un tube primaire 97 et un tube primaire 98. Une troisième tige 906 peut être insérée entre un tube primaire 99 et un tube primaire 900. L'intervalle entre les tubes primaires 902 et 95, 96 et 97, 98 et 99, 900 et 901 ne comprend pas de tige.

Les tiges 904, 905, 906, 907 comme les premiers tubes 95, 96, 97, 98, 99, 900, 901, 902 sont portées par une paroi interne d'une gaine 93 entourant le premier anneau 92.

Avantageusement, le positionnement des tiges 904, 905, 906, 907 dans un interstice sur deux séparant les tubes primaires permet de maintenir la polarisation de l'onde se propageant dans le septième guide d'ondes.

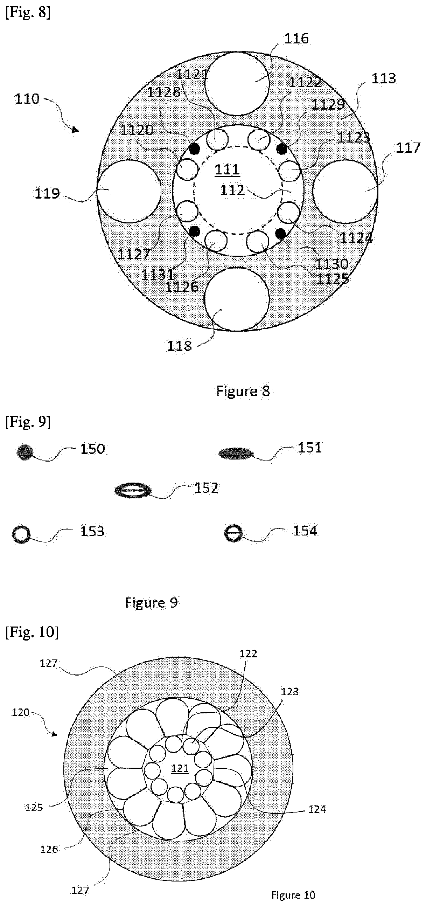

La figure 8 représente un exemple d'un huitième guide d'ondes 110 à propagation monomode et à maintien de polarisation selon l'invention.

Le huitième guide d'ondes 110 tel que représenté sur la figure 10 combine les avantages et fonctionnalités du septième guide d'ondes 90 à maintien de polarisation et du troisième guide d'ondes 30 à propagation monomode.

Le huitième guide d'ondes 110 comprend un cœur creux 111 entouré d'un premier anneau 112. Le premier anneau 112 comprend huit tubes primaires 1120, 1121, 1122, 1123, 1124, 1125, 1126, 1127. Dans un intervalle sur deux entre deux tubes primaires consécutifs est insérée une tige 1128, 1129, 1130, 1131. Par exemple une première tige 1128 peut être insérée entre deux tubes primaires 1120, 1121, une deuxième tige 1129 peut être insérée entre deux tubes primaires 1122 et 1123, une troisième tige 1130 peut être insérée entre deux tubes primaires 1124 et 1125, une quatrième tige 1131 peut être insérée entre deux tubes primaires 1126 et 1127.

En outre, le huitième guide d'ondes 110 comprend un deuxième anneau 113 comprenant quatre tubes secondaires 116, 117, 118, 119. Les tubes secondaires peuvent par exemple être positionnés en vis-à-vis des intervalles entre les tubes primaires 1121 et 1122, 1123 et 1123, 1125 et 1126, 1127 et 1120, entre lesquels n'ont pas été insérés de tige.

Avantageusement, le positionnement des tiges 1128, 1129, 1130, 1131 dans un interstice sur deux séparant les tubes primaires 1120, 1121, 1122, 1123, 1124, 1125, 1126, 1127 permet de maintenir la polarisation de l'onde se propageant dans le guide d'ondes selon l'invention. Le positionnement des tubes secondaires 116, 117, 118, 119 en regard d'un deuxième interstice sur deux séparant des tubes primaires, lesdits deuxièmes interstices ne comprenant pas de tiges, permet d'augmenter les pertes pour les modes des ordres supérieurs au mode préférentiellement guidé dans cœur du guide d'ondes selon l'invention.

La figure 9 représente différentes sections de tiges pouvant être utilisées dans le cadre de l'invention. Un premier type de tiges peut être un tube cylindrique plein 150. Un deuxième type de tige peut être un tube plein avec une section ellipsoïdale 151, aussi nommé tige elliptique 151. Un troisième type de tige peut être un cylindre creux 153. Un quatrième type de tige 154 peut être un tube cylindrique creux avec une séparation longitudinale, divisant ledit cylindre en deux portions de cylindre, le quatrième type de tige peut être nommé tube barré 154. Un cinquième type de tige 152 peut être un tube creux à section elliptique avec une séparation sur toute la longueur de la tige 152 selon le grand axe de la section elliptique, le cinquième type de guide peut être nommé tube elliptique barré 152.

La figure 10 représente un neuvième exemple d'un guide d'ondes 120 selon l'invention.

Sur la figure 10, le neuvième guide d'ondes 120 comprend un cœur creux 121 entouré d'un premier anneau 122.

Le premier anneau 112 peut comprendre neuf tubes primaires 123. Les tubes primaires 123 peuvent avoir une des formes représentées sur la figure 1b. Les tubes primaires 123 peuvent être portés par la première structure annulaire 124.

Le premier anneau 122 est entouré d'un deuxième anneau 125. Le deuxième anneau 125 peut comprendre des tubes secondaires 126 en forme de pétales 109, tels que représentés sur la figure 1c.

Sur la figure 10 et à titre d'exemple le deuxième anneau 125 comprend onze tubes primaires 126 en forme de pétales répartis de façon homogène sur ce deuxième anneau 125. Par exemple sur la figure 10, les pétales sont contigus et forment une première corolle. Il est possible dans un mode de réalisation alternatif de disposer au moins une deuxième corolle entourant la première corolle.

Les tubes secondaires 126 sont portés par une gaine ou jaquette 127 entourant le deuxième anneau 125.

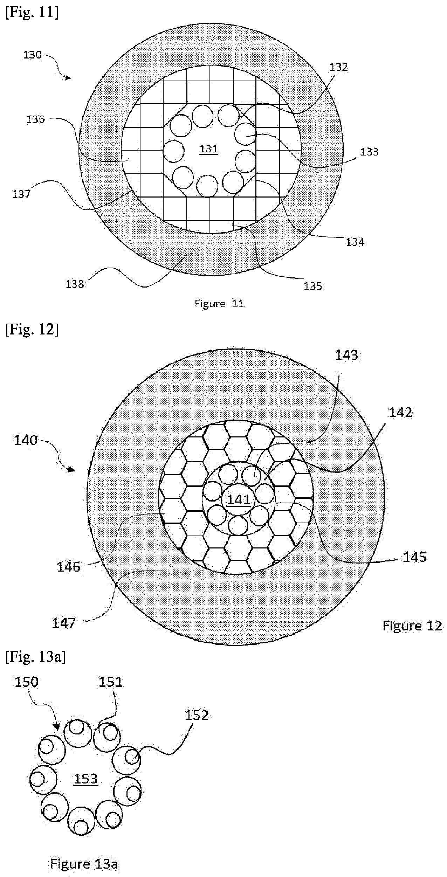

La figure 11 représente un dixième exemple d'un guide d'ondes 130 selon l'invention.

Sur la figure 11 le dixième guide d'ondes 130 comprend un cœur creux 131 entouré d'un premier anneau 132.

Le premier anneau 132 comprend à titre d'exemple neuf tubes primaires 133. Les tubes primaires 133 peuvent avoir une des formes représentées sur la figure 1b.

Les premiers tubes 133 peuvent être supportés par une grille 134.

Le dixième guide d'ondes 130 comprend en outre un deuxième anneau 135 comprenant des tubes secondaires 136 formant une grille 134 de motif unitaire carré. La grille est découpée de façon à former le deuxième anneau 135 autour du premier anneau 132 et de façon à avoir un contour externe 137 de forme circulaire.

Sur la figure 11 une jaquette 138 est représentée, ladite jaquette 138 entourant le deuxième anneau 135.

La figure 12 représente un onzième exemple d'un guide d'ondes 140 selon l'invention.

Sur la figure 12, le onzième guide d'ondes 140 comprend un cœur creux 141.

Le cœur creux 141 est entouré d'un premier anneau 142 comprenant des tubes creux primaires 143. À titre d'exemple, sur la figure 12, sept tubes creux primaires 143 sont représentés.

Les tubes creux primaires 143 peuvent être de l'une des formes représentées sur la figure 1b.

Les premiers tubes creux 143 peuvent être portés par une première structure tubulaire 145.

Le onzième guide d'ondes 140 comprend en outre un deuxième anneau 146. Les tubes secondaires du deuxième anneau 146 sont agencés de manière à former une grille à motif unitaire hexagonal telle une structure Kagomé, par exemple. La grille à motif unitaire hexagonal est découpée afin d'avoir un contour interne et un contour externe circulaires.

De manière générale, les tubes secondaires formant le deuxième anneau peuvent former une grille comprenant au moins un élément unitaire. L'élément unitaire peut avoir une section d'une des formes représentées sur les figures 1b, 1c, ou encore une forme triangulaire.

Alternativement, la grille peut être composée de plusieurs motifs unitaires différents parmi les formes représentées sur les figures 1b, 1c, une forme triangulaire.

Ainsi, les tubes secondaires peuvent former une grille d'éléments unitaires triangulaires, ou sensiblement carrés, ou rectangulaires

Sur la figure 12 une jaquette 147 du onzième guide d'ondes est également représentée, entourant le deuxième anneau 146.

La figure 13a représente un exemple d'une première alternative de structure d'un premier anneau 150 d'un guide d'ondes selon l'invention. Sur la figure 13a est représenté un exemple d'agencement de tubes primaires 151 selon l'invention. Les tubes primaires 151 représentés sur la figure 13a sont de la deuxième forme des tubes primaires 16 représentés sur la figure 1b. Chaque premier tube 151 comprend donc un autre tube à section circulaire 152 tel que représenté sur la figure 1b.

Sur la figure 13a, neuf tubes primaires 151 sont représentés pour l'exemple. Les neuf autres tubes sont par exemple disposés sur le pourtour du diamètre interne du premier anneau 150, de façon à maximiser leur distance avec le centre du premier anneau 150.

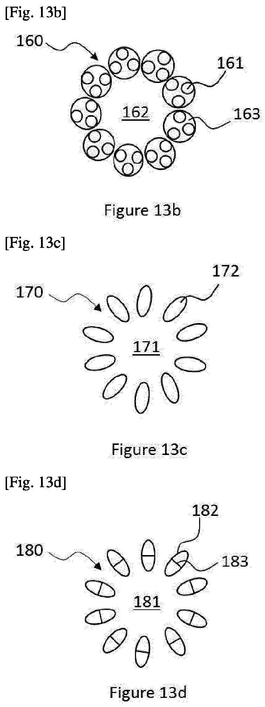

La figure 13b représente un exemple d'une deuxième alternative d'une structure d'un premier anneau 160 d'un guide d'ondes comprenant un cœur creux 162, selon l'invention. Pour la deuxième alternative, le premier anneau comprend des tubes primaires 163 comprenant eux-mêmes d'autres tubes, par exemple trois autres tubes 161 tel que les autres tubes 100, 101, 102 représentés sur la figure 1b.

Pour l'exemple la figure 13b représente un premier anneau 160 comprenant neuf tubes primaires 161. Chacun des neuf tubes primaires 161 comprend trois autres tubes 163. Les autres tubes 163 sont par exemple portés par la circonférence intérieure des tubes primaires 161. Avantageusement, les autres tubes 163 sont disposés de manière à ce qu'un intervalle entre deux autres tubes 163 se trouve en vis-à-vis du centre du premier anneau 160.

La figure 13c représente une troisième alternative d'une structure d'un premier anneau 170 d'un guide d'ondes selon l'invention. Le premier anneau 170 entoure un cœur creux 171. Les tubes primaires 172 représentés sur la figure 15c ont une section de type ellipsoïdale 103 telle représentée sur la figure 1b.

Sur la figure 13c sont représentés pour l'exemple dix tubes primaires 172 de section ellipsoïdale. Par exemple les tubes primaires 172 de section ellipsoïdale peuvent être disposés de façon à ce que le grand axe de l'ellipse formant la section de chaque premier tube 172 soit dirigé vers le centre du cœur 171.

La figure 13d représente une quatrième alternative d'une structure d'un premier anneau 180 d'un guide d'ondes selon l'invention. Le premier anneau 180 entoure un cœur creux 181. Les tubes primaires 182 représentés sur la figure 13d ont une section de type ellipsoïdale barrée 104, 105 telle représentée sur la figure 1b. Sur la figure 13d sont représentés pour l'exemple dix tubes primaires 182 de section ellipsoïdale. Par exemple les tubes primaires de section ellipsoïdale peuvent être disposés de façon à ce que le grand axe de l'ellipse formant la section de chaque premier tube 182 soit dirigé vers le centre du cœur 181.

La barre 183 de l'ellipse 182 peut être disposée dans l'ellipse 182 selon son petit diamètre par exemple.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

**1.** Guide d'ondes électromagnétiques (1), à base du mécanisme de couplage inhibé, comprenant une partie centrale creuse (2) dont le contour est au moins en partie défini par un premier ensemble d'au moins sept tubes creux primaires (8,9,10,11,12,13,14), répartis de manière annulaire autour de la partie creuse centrale, lesdits tubes creux primaires étant sensiblement de même taille, distants les uns des autres, ledit guide d'ondes étant **caractérisé en ce qu'**il comprend en outre un deuxième ensemble de tubes comprenant au moins un tube secondaire creux (6), lorsqu'il y en a plusieurs ces tubes secondaires sont positionnés de manière annulaire autour des tubes primaires, l'aire de l'au moins un tube secondaire creux étant comprise entre 0,35 et 0,50 fois l'aire de la partie creuse centrale.

**2.** Guide d'ondes selon la revendication 1, **caractérisé en ce qu'**il configuré pour réaliser un guidage monomodale des ondes.

**3.** Guide d'ondes selon l'une quelconque des revendications 1 à 2, **caractérisé en ce que** l'au moins un tube secondaire creux est positionné en vis-à-vis d'un des tubes creux primaires.

**4.** Guide d'ondes selon l'une quelconque des revendications 1 à 2, **caractérisé en ce que** l'au moins un tube secondaire creux est positionné en vis-à-vis d'un intervalle entre deux tubes creux primaires.

**5.** Guide d'ondes selon l'une quelconque des revendications précédentes, **caractérisé en ce que** les tubes creux primaires ont une section d'une forme parmi les formes suivantes :

    a. un cercle ;
    b. une ellipse ;
    c. une ellipse barrée ;
    d. au moins deux cercles, dont un premier cercle et au moins un deuxième cercle inscrit dans le premier cercle.

**6.** Guide d'ondes selon l'une quelconque des revendications précédentes, **caractérisé en ce que** l'au moins un tube secondaire creux a une section d'une forme parmi les formes suivantes :

    a. un cercle ;
    b. un hexagone ;
    c. un carré ;
    d. un triangle ;
    e. une forme dont le contour est composé d'un arc de cercle et de trois côtés d'un polygone.

**7.** Guide d'ondes selon la revendication précédente, **caractérisé en ce que** les sections des tubes secondaires creux forment une grille comprenant au moins un élément unitaire ou plusieurs éléments unitaires de différentes formes.

8. Guide d'ondes selon l'une quelconque des revendications précédentes, **caractérisé en ce que** ledit guide d'ondes est une fibre optique micro-structurée.

9. Guide d'ondes selon l'une quelconque des revendications précédentes, **caractérisé en ce que** les tubes creux primaires et les tubes secondaires creux sont en matériau diélectrique.

10. Guide d'ondes selon l'une quelconque des revendications précédentes, **caractérisé en ce que** les tubes creux primaires et les tubes secondaires creux ont des parois de même épaisseur.

11. Guide d'ondes selon l'une quelconque des revendications précédentes, **caractérisé en ce que** la partie centrale creuse, les tubes creux primaires et les tubes secondaires creux sont remplis par un gaz ou de l'air.

12. Guide d'ondes selon l'une quelconque des revendications précédentes, **caractérisé en ce qu'**il est configuré pour guider les ondes par couplage inhibé.

13. Guide d'ondes selon l'une quelconque des revendications précédentes, **caractérisé en ce qu'**il est configuré pour guider une onde parmi :

   a. une onde de l'extrême ultraviolet à l'infrarouge ;
   b. une onde Téra-hertz ;
   c. une micro-onde.

14. Guide d'ondes selon l'une quelconque des revendications précédentes, **caractérisé en ce que** le matériau des tubes secondaires creux est un matériau à faible coefficient d'absorption tel que le quartz, la silice ayant un saut d'indice de réfraction supérieur à 1,2 fois l'indice de réfraction du vide, ou le téflon ayant un indice de réfraction supérieur à 1,2 fois celui de l'air.

15. Guide d'ondes selon l'une quelconque des revendications 1 à 13, **caractérisé en ce que** le matériau des tubes secondaires creux est un matériau hautement réflectif tel un métal comme le cuivre.

16. Guide d'ondes selon l'une quelconques des revendications précédentes, caractérisé qu'il comprend en outre un ensemble de tiges, au moins une tige étant positionnée entre deux tubes creux primaires, à distance de tubes secondaires creux.

17. Guide d'ondes selon la revendication 16, **caractérisé en ce que** l'au moins une tige est d'une des formes suivantes :

   a. un tube plein cylindrique ;
   b. un tube plein elliptique ;
   c. un tube creux cylindrique ;
   d. un tube creux cylindrique barré dont les moitiés sont séparées sur toute la longueur du tube ;
   e. un tube creux elliptique barré dont les moitiés sont séparées sur toute la longueur du tube.

18. Guide d'ondes selon l'une quelconque des revendications précédentes, **caractérisé en ce que** les tubes secondaires creux sont réalisés dans une gaine (3) du guide d'ondes et **en ce que** les tubes creux primaires sont fixés à la paroi interne (5) de ladite gaine.

19. Guide d'ondes selon l'une quelconque des revendications précédentes, **caractérisé en ce que** chaque tube creux primaire est fixé à la paroi d'un tube secondaire creux.

20. Guide d'ondes selon l'une quelconque des revendications 1 à 18, **caractérisé en ce que** les tubes secondaires creux sont réalisés dans une gaine (3) du guide d'ondes et **en ce que** les tubes creux primaires son fixés à la paroi interne (5) de ladite gaine, et **en ce que** la distance $\delta_{rr}$ entre l'au moins un tube secondaire et la paroi interne (5) de la gaine (3) est inférieure à $0.2 \ast r_{tin}$ pour le cas d'un tube creux primaire circulaire où $r_{tin}$ est le rayon d'un tube creux primaire circulaire, ou inférieure à $0.2 \ast \sqrt{(\text{Aire}_{in}/\pi)}$ pour un tube creux primaire ayant une aire égale à $\text{Aire}_{in}$ .

**Patentansprüche**

1. Elektromagnetischer Wellenleiter (1), der auf dem Mechanismus der unterdrückten Kopplung basiert, umfassend einen hohlen Mittelteil (2), dessen Kontur zumindest teilweise durch einen ersten Satz von mindestens sieben primären Hohlrohren (8, 9, 10, 11, 12, 13, 14) definiert ist, die ringförmig um den hohlen Mittelteil verteilt sind, wobei die primären Hohlrohre im Wesentlichen die gleiche Größe haben und voneinander beabstandet sind, wobei der Wellenleiter **dadurch gekennzeichnet ist, dass** er außerdem einen zweiten Satz von Rohren umfasst, der mindestens ein sekundäres Hohlrohr (6) umfasst, wobei, wenn mehrere davon vorhanden sind, diese sekundären Rohre ringförmig um die primären Rohre angeordnet sind, wobei die Fläche des mindestens einen sekundären Hohlrohrs zwischen dem 0,35- und 0,50-Fachen der Fläche des hohlen Mittelteils beträgt.

2. Wellenleiter nach Anspruch 1, **dadurch gekennzeichnet, dass** er zum Durchführen einer Singlemode-Wellenleitung konfiguriert ist.

3. Wellenleiter nach einem der Ansprüche 1 bis 2, **dadurch gekennzeichnet, dass** das mindestens eine sekundäre Hohlrohr einem der primären Hohlrohre gegenüberliegend angeordnet ist.

4. Wellenleiter nach einem der Ansprüche 1 bis 2, **dadurch gekennzeichnet, dass** das mindestens eine sekundäre Hohlrohr einer Lücke zwischen zwei primären Hohlrohren gegenüberliegend angeordnet ist.

5. Wellenleiter nach einem der vorstehenden Ansprüche, **dadurch gekennzeichnet, dass** die primären Hohlrohre einen Querschnitt in einer der folgenden Formen aufweisen:

   a. Kreis;
   b. Ellipse;
   c. durchgestrichene Ellipse;
   d. mindestens zwei Kreise, darunter ein erster Kreis und mindestens ein zweiter Kreis, der in den ersten Kreis eingeschrieben ist.

6. Wellenleiter nach einem der vorstehenden Ansprüche, **dadurch gekennzeichnet, dass** das mindestens ein sekundäres Hohlrohr einen Querschnitt in einer der folgenden Formen aufweist:

   a. Kreis;
   b. Sechseck;
   c. Quadrat;
   d. Dreieck;
   e. Form, deren Kontur aus einem Kreisbogen und drei Seiten eines Polygons besteht.

7. Wellenleiter nach dem vorstehenden Anspruch, **dadurch gekennzeichnet, dass** die Querschnitte der sekundären Hohlrohre ein Gitter bilden, das mindestens ein Einheitselement oder mehrere Einheitselemente unterschiedlicher Form umfasst.

8. Wellenleiter nach einem der vorstehenden Ansprüche, **dadurch gekennzeichnet, dass** es sich bei dem Wellenleiter um eine mikrostrukturierte Lichtleitfaser handelt.

9. Wellenleiter nach einem der vorstehenden Ansprüche, **dadurch gekennzeichnet, dass** die primären Hohlrohre und die sekundären Hohlrohre aus dielektrischem Material bestehen.

10. Wellenleiter nach einem der vorstehenden Ansprüche, **dadurch gekennzeichnet, dass** die primären Hohlrohre und die sekundären Hohlrohre Wände gleicher Dicke haben.

11. Wellenleiter nach einem der vorstehenden Ansprüche, **dadurch gekennzeichnet, dass** der hohle Mittelteil, die primären Hohlrohre und die sekundären Hohlrohre gas- oder luftgefüllt sind.

12. Wellenleiter nach einem der vorstehenden Ansprüche, **dadurch gekennzeichnet, dass** er dazu konfiguriert ist, Wellen durch unterdrückte Kopplung zu leiten.

13. Wellenleiter nach einem der vorstehenden Ansprüche, **dadurch gekennzeichnet, dass** er dazu konfiguriert ist, eine Welle zu leiten, aus:

   a. einer Welle vom extremen Ultraviolett bis zum Infrarot;
   b. einer Terahertzwelle;
   c. einer Mikrowelle.

14. Wellenleiter nach einem der vorstehenden Ansprüche, **dadurch gekennzeichnet, dass** das Material der sekundären Hohlrohre ein Material mit niedrigem Absorptionskoeffizienten ist, wie etwa Quarz, Siliciumdioxid mit einem Brechungsindexsprung, der größer als das 1,2-Fache des Brechungsindex von Vakuum ist, oder Teflon mit einem Brechungsindex, der größer als das 1,2-Fache des Brechungsindex von Luft ist.

15. Wellenleiter nach einem der Ansprüche 1 bis 13, **dadurch gekennzeichnet, dass** das Material der sekundären Hohlrohre ein hochreflektierendes Material ist, wie etwa ein Metall wie Kupfer.

16. Wellenleiter nach einem der vorstehenden Ansprüche, **dadurch gekennzeichnet, dass** er außerdem einen Satz von Stäben umfasst, wobei mindestens ein Stab zwischen zwei primären Hohlrohren im Abstand von den sekundären Hohlrohren angeordnet ist.

17. Wellenleiter nach Anspruch 16, **dadurch gekennzeichnet, dass** der mindestens eine Stab eine der folgenden Formen aufweist:

   a. zylindrisches Vollrohr;
   b. Vollrohr mit elliptischem Querschnitt;
   c. zylindrisches Hohlrohr;
   d. durchgestrichenes zylindrisches Hohlrohr, dessen Hälften über die gesamte Länge des Rohrs voneinander getrennt sind;
   e. Hohlrohr mit durchgestrichenem elliptischem Querschnitt, dessen Hälften über die gesamte Länge des Rohrs voneinander getrennt sind.

18. Wellenleiter nach einem der vorstehenden Ansprüche, **dadurch gekennzeichnet, dass** die sekundären Hohlrohre in einem Mantel (3) des Wellenleiters ausgebildet sind, und dadurch, dass die primären Hohlrohre an der Innenwand (5) dieses Mantels befestigt sind.

19. Wellenleiter nach einem der vorstehenden Ansprüche, **dadurch gekennzeichnet, dass** jedes primäre Hohlrohr an der Wand eines sekundären Hohlrohrs befestigt ist.

20. Wellenleiter nach einem der Ansprüche 1 bis 18, **dadurch gekennzeichnet, dass** die sekundären Hohlrohre in einem Mantel (3) des Wellenleiters ausgebildet sind, und dadurch, dass die primären Hohlrohre an der Innenwand (5) dieses Mantels befestigt sind, und dadurch, dass der Abstand $\delta_{rr}$ zwischen dem mindestens einen sekundären Rohr und der Innenwand (5) des Mantels (3) im Fall eines primären Hohlrohrs mit kreisförmigem Querschnitt kleiner als $0{,}2*r_{tin}$ ist, wobei $r_{tin}$ der Radius eines primären Hohlrohrs mit kreisförmigem Querschnitt ist, oder bei einem primären Hohlrohr mit einer Fläche, die gleich der $Fläche_{in}$ ist, kleiner als $0{,}2*\sqrt{(Fläche_{in}/\pi)}$ ist.

## Claims

1. Electromagnetic waveguide (1), based on the inhibited-coupling mechanism, comprising a hollow central portion (2) the contour of which is at least partially defined by a first set of at least seven primary hollow tubes (8,9,10,11,12,13,14), distributed annularly around the central hollow portion, said primary hollow tubes being substantially of the same size, distant from one another, said waveguide being **characterized in that** it also comprises a second set of tubes comprising at least one hollow secondary tube (6), when there are several thereof, these secondary tubes are positioned annularly around the primary tubes, the area of the at least one hollow secondary tube being comprised between 0.35 and 0.50 times the area of the central hollow portion.

2. Waveguide according to claim 1, **characterized in that** it is configured to perform single-mode waveguiding.

3. Waveguide according to any one of claims 1 to 2, **characterized in that** the at least one hollow secondary tube is positioned opposite one of the primary hollow tube.

4. Waveguide according to any one of claims 1 to 2. **characterized in that** the at least one hollow secondary tube is positioned opposite a gap between two primary hollow tubes.

5. Waveguide according to any one of the preceding claims, **characterized in that** the primary hollow tubes exhibit a cross section having a shape from among the following shapes:

    a. a circle;
    b. an ellipse;
    c. a barred ellipse;
    d. at least two circles, including a first circle and at least one second circle inscribed within the first circle.

6. Waveguide according to any one of the preceding claims, **characterized in that** the at least one hollow secondary tube exhibits a cross section having a shape from among the following shapes:

    a. a circle;
    b. a hexagon;
    c. a square;
    d. a triangle;
    e. a shape the contour of which is composed of an arc of a circle and of three sides of a polygon.

7. Waveguide according to the preceding claim, **characterized in that** the cross sections of the hollow secondary tubes form a grid comprising at least one unitary element or several unitary elements having different shapes.

8. Waveguide according to any one of the preceding claims, **characterized in that** said waveguide is a microstructured optical fibre.

9. Waveguide according to any one of the preceding claims, **characterized in that** the primary hollow tubes and the hollow secondary tubes are made from a dielectric material.

10. Waveguide according to any one of the preceding claims, **characterized in that** the primary hollow tubes and the hollow secondary tubes have walls of the same thickness.

11. Waveguide according to any one of the preceding claims, **characterized in that** the hollow central portion, the primary hollow and hollow secondary tubes are filled with a gas or air.

12. Waveguide according to any one of the preceding claims, **characterized in that** it is configured to guide the waves by inhibited coupling.

13. Waveguide according to any one of the preceding claims, **characterized in that** it is configured to guide a wave from among:

    a. a wave from extreme ultraviolet to infrared;
    b. a terahertz wave;
    c. a microwave.

**14.** Waveguide according to any one of the preceding claims, **characterized in that** the material of the hollow secondary tubes is a material having a low absorption coefficient such as quartz, or silica having a refractive-index step greater than 1.2 times the refractive index of the void, or Teflon™ having a refractive index greater than 1.2 times that of air.

**15.** Waveguide according to any one of claims 1 to 13, **characterized in that** the material of the hollow secondary tubes is a highly reflective material such as a metal like copper.

**16.** Waveguide according to any one of the preceding claims, **characterized in that** it also comprises a set of rods, at least one rod being positioned between two primary hollow tubes, at a distance from hollow secondary tubes.

**17.** Waveguide according to claim 16, **characterized in that** the at least one rod exhibits one of the following forms:

> a. a cylindrical solid tube;
> b. an elliptical solid tube;
> c. a cylindrical hollow tube;
> d. a barred cylindrical hollow tube, the two halves of which are separated over the whole length of the tube;
> e. a barred elliptical hollow tube, the two halves of which are separated over the whole length of the tube.

**18.** Waveguide according to any one of the preceding claims, **characterized in that** the hollow secondary tubes are produced in a cladding (3) of the waveguide and **in that** the primary hollow tubes are fixed to the inner wall (5) of said cladding.

**19.** Waveguide according to any one of the preceding claims, **characterized in that** each primary hollow tube is fixed to the wall of a hollow secondary tube.

**20.** Waveguide according to any one of claims 1 to 18, **characterized in that in that** the hollow secondary tubes are made in a waveguide sheath (3) and **in that** the primary hollow tubes are fixed to the internal wall (5) of said sheath, and **in that** the distance $\delta_{rr}$ between the at least one hollow secondary tube and the inner wall (5) of the cladding (3) is less than $0.2*r_{tin}$ for the case of a primary hollow tube that is circular or less than $0.2*\sqrt{(Area_{in}/\pi)}$ for a primary hollow tube having an area equal to $Area_{in}$.

[Fig. 1a]

Figure 1a

[Fig. 1b]

Figure 1b

[Fig. 1c]

Figure 1c

[Fig. 2]

Figure 2

[Fig. 3]

Figure 3

[Fig. 4]

Figure 4

[Fig. 5]

Figure 5

[Fig. 6]

Figure 6

[Fig. 7]

Figure 7

[Fig. 8]

Figure 8

[Fig. 9]

Figure 9

[Fig. 10]

Figure 10

[Fig. 11]

Figure 11

[Fig. 12]

Figure 12

[Fig. 13a]

Figure 13a

[Fig. 13b]

Figure 13b

[Fig. 13c]

Figure 13c

[Fig. 13d]

Figure 13d

## RÉFÉRENCES CITÉES DANS LA DESCRIPTION

**Documents brevets cités dans la description**

- WO 2019071921 A1